(19) **Europäisches Patentamt / European Patent Office / Office européen des brevets**

(11) **EP 2 061 030 A1**

(12) **EUROPEAN PATENT APPLICATION**
published in accordance with Art. 153(4) EPC

(43) Date of publication:
**20.05.2009 Bulletin 2009/21**

(21) Application number: **07828176.3**

(22) Date of filing: **04.09.2007**

(51) Int Cl.:
**G11B 9/02** (2006.01)   **G11B 9/14** (2006.01)

(86) International application number:
**PCT/JP2007/067183**

(87) International publication number:
**WO 2008/029787 (13.03.2008 Gazette 2008/11)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **06.09.2006 JP 2006241819**

(71) Applicant: **Pioneer Corporation
Tokyo 153-8654 (JP)**

(72) Inventors:
• **ONOE, Atsushi
  Tsurugashima-shi
  Saitama 350-2288 (JP)**
• **MAEDA, Takanori
  Tsurugashima-shi
  Saitama 350-2288 (JP)**

(74) Representative: **Viering, Jentschura & Partner
Grillparzerstrasse 14
81675 München (DE)**

(54) **INFORMATION RECORDING MEDIUM ON WHICH INFORMATION IS RECORDED AS CONVEXES/CONCAVES AND ITS MANUFACTURING METHOD**

(57)    A ferroelectric thin film (11) is formed by using ferroelectric bodies having different etching rates in accordance with polarization direction and the ferroelectric thin film (11) is etched so as to form a pit (14) having a maximum length value of 1 nm to 30 nm in the orientation direction. Moreover, the depth of the pit (14) is set so that it is possible to distinguish the electrostatic capacity based on the polarization direction of the ferroelectric thin film (11) from the electrostatic capacity based on the pit (14).

[FIG. 1]

EP 2 061 030 A1

## Description

Technical Field

The present invention relates to an information recording medium, which is suitable to be used for a scanning probe memory apparatus, which uses a ferroelectric substance, and in which information is recorded as physical irregularities on the surface, and a method of manufacturing the information recording medium.

Background Art

Japanese Patent Application Laid Open No. Hei 6-111392 discloses such a technology that physical irregularities (e.g. pits) are formed on the surface of a ferroelectric substance, to thereby record information onto the ferroelectric substance.

According to the publication, the physical pits are formed on the surface of the ferroelectric substance in the following method.

Firstly, a semiconductor substrate is prepared, which is formed from a p-type silicon wafer with a resistivity of 10 Ωcm and an impurity concentration of $5 \times 10^{21}$ $m^{-3}$.

Then, on the surface of the semiconductor substrate, the physical pits, each of which is 0.2 $\mu$m long, 1.0 $\mu$m wide, and about 0.1 $\mu$m deep, are formed at 0.2 $\mu$m intervals by electron-beam printing and etching.

Then, a vinylidene fluoride (VDF)-trifluoroethylene (TrFE) copolymer (vinylidene fluoride 65mol%) is dissolved in methyl ethyl ketone (MEK) at 5wt%, and the solution is applied on the semiconductor substance under such condition that the solution is spun off using a commercially available spin coater at 5000 rpm for 10 seconds.

Then, the applied coat is annealed in an oven at 145 °C for two hours under air atmosphere, to form a thin film of the VDF/TrFE copolymer with a thickness of 0.3 $\mu$m.

On the surface of an organic ferroelectric layer formed of the thin film of the VDF/TrFE copolymer formed in this manner, physical pits are formed in accordance with the physical pits formed in the semiconductor layer.

On the other hand, a scanning probe memory apparatus using the ferroelectric substance as the information recording medium is now under study.

In the scanning probe memory apparatus, a probe with a tip diameter of approximately 25 nm is brought close to or into contact with the surface of the ferroelectric substance, and a voltage large enough to form an electric field which exceeds the coercive electric field of the ferroelectric substance is applied to the ferroelectric substance through the probe, to thereby change the polarization direction of the ferroelectric substance. By this, information is recorded into the ferroelectric substance. According to the scanning probe memory apparatus, one-bit information can be recorded into an area with a length of approximately 25 nm in one direction. As a result, the information recording density exceeds one terabit per one square inch (6.45 $cm^2$).

Incidentally, the scanning probe memory apparatus records the information by changing the polarization direction of the ferroelectric substance, not by forming the irregularities on the surface of the ferroelectric substance.

Patent document 1: Japanese Patent Application Laid Open No. Hei 6-111392

Disclosure of Invention

Subject to be Solved by the Invention

If the physical pits can be formed, each of which has a length of several nm to several tens nm in the arrangement direction, it is possible to produce a new high-density information recording medium in which the length in the arrangement direction per one-bit information is several nm to several tens nm.

Moreover, by using such a high-density information recording medium for the aforementioned scanning probe memory apparatus, it is possible to produce a new high-capacity information memory apparatus.

Furthermore, if the information recording medium in which the information is recorded on the surface as the physical pits, each of which has a length of several nm to several tens nm in the arrangement direction, can be used as a stamper or a mother substrate, it is possible to easily produce many replicas of the information recording medium in which the information is recorded on the surface as the physical pits each of which has a length of several nm to several tens nm in the arrangement direction. By treating the replicas as information recording medium products in which the information is prerecorded (e.g. ROM products), it is possible to inexpensively produce many information recording medium products.

However, the pit disclosed in the aforementioned patent document is 0.2 $\mu$m at most. Thus, the formation of the pit having a size of several nm to several tens nm cannot be expected in the aforementioned technology of the patent document. As a result, in the aforementioned technology of the patent document, it is hardly possible to produce the new high-density information recording medium in which the length in the arrangement direction per one-bit information is several nm to several tens nm.

In view of the aforementioned problems, it is therefore an object of the present invention to provide a high-density information recording medium in which information is recorded as physical irregularities and in which the length in the arrangement direction per one-bit information is several nm to several tens nm.

Means for Solving the Subject

The above object of the present invention can be achieved by an information recording medium provided with: a ferroelectric thin film; an electrode layer disposed under the ferroelectric thin film; and a plurality of concave portions or a plurality of convex portions formed on an upper surface of the ferroelectric thin film, the plurality of concave portions or the plurality of convex portions being arranged so as to correspond to a bit arrangement of digital data, a minimum value of length in an arrangement direction per 1 bit of each of the concave portions or the convex portions being 1 nm or more but not exceeding 30 nm.

The above object of the present invention can be also achieved by an information recording medium, according to claim 7, provided with: a ferroelectric thin film; an electrode layer disposed under the ferroelectric thin film; and a plurality of concave portions or a plurality of convex portions formed on an upper surface of the ferroelectric thin film, the plurality of concave portions or the plurality of convex portions being arranged so as to correspond to a bit arrangement of digital data, a depth of each of the concave portions or a height of each of the convex portions being set such that amount of change in capacitance of the ferroelectric thin film based on a polarization direction of the ferroelectric thin film is greater than that based on presence or absence of the concave portions or the convex portions.

The above object of the present invention can be also achieved by a method of manufacturing an information recording medium in which information is recorded as physical concave portions or convex portions in a medium material, the method provided with: a voltage applying process of locally changing a polarization direction of a ferroelectric substance by preparing the medium material, which has a ferroelectric thin film and an electrode layer, the ferroelectric thin film being formed of the ferroelectric substance whose etching rate varies depending on a difference in the polarization direction and having an upper surface crossing the polarization direction of the ferroelectric substance, the electrode layer being jointed to a lower surface of the ferroelectric thin film, by bringing a tip of a probe close to or into contact with the upper surface, and by applying a voltage between the tip of the probe and the electrode layer; and an etching process of etching the upper surface by bringing the upper surface of the ferroelectric thin film of the medium material after the voltage applying process into contact with an etchant to thereby etch the upper surface.

Brief Description of Drawings

[FIG. 1] FIG. 1 is a cross sectional view showing an embodiment of the information recording medium of the present invention.
[FIG. 2] FIG. 2 is an enlarged cross sectional view showing one portion of a ferroelectric thin film in FIG. 1.

[FIG. 3] FIG. 3 is an explanatory diagram showing the polarization direction of the ferroelectric thin film in FIG. 1.
[FIG. 4] FIG. 4 is an explanatory diagram showing a method of recording second information into the information recording medium in FIG. 1.
[FIG. 5] FIG. 5 is an explanatory diagram showing a method of reading first information and second information recorded on the information recording medium in FIG. 1.
[FIG. 6] FIG. 6 is an explanatory diagram showing the path of a high-frequency signal when the probe of an information reading apparatus is on pits formed in the information recording medium.
[FIG. 7] FIG. 7 is an explanatory diagram showing the path of the high-frequency signal when the probe of the information reading apparatus is on a portion in which the pit is not formed in the information recording medium.
[FIG. 8] FIG. 8 is an explanatory diagram showing a detection signal or the like read by the information reading apparatus.
[FIG. 9] FIG. 9 is a cross sectional view showing a medium material used for the manufacturing of the information recording medium in an embodiment of the method of manufacturing the information recording medium of the present invention.
[FIG. 10] FIG. 10 is an explanatory diagram showing the polarization direction of the ferroelectric substance which forms the ferroelectric thin film of the medium material in FIG. 9.
[FIG. 11] FIG. 11 is an explanatory diagram showing a voltage application process in the embodiment of the method of manufacturing the information recording medium of the present invention.
[FIG. 12] FIG. 12 is an explanatory diagram showing the waveform of a pulse signal applied in the voltage application process, the polarization direction of the ferroelectric substance formed by the application of the pulse signal, and the pits on the ferroelectric thin film formed in accordance with the polarization direction.
[FIG. 13] FIG. 13 is an explanatory diagram showing a procedure of mass-producing replicas of the information recording medium by using the information recording medium as a stamper.
[FIG. 14] FIG. 14 is an explanatory diagram showing a procedure of producing the stamper of the information recording medium by using the information recording medium as a mother substrate and of mass-producing replicas of the information recording medium by using the stamper of the information recording medium.

Description of Reference Codes

1            information recording medium
11, 31      ferroelectric thin film
12, 32      electrode layer
13, 33      supporting substrate
14, 34      pit
20          information reading apparatus
21          probe
22          return electrode
30          medium material
40          probe voltage applying apparatus
43          probe array
44          probe

Best Mode for Carrying Out the Invention

Hereinafter, the best mode for carrying out the present invention will be explained in each embodiment in order with reference to the drawings.

(Structure of Information Recording Medium)

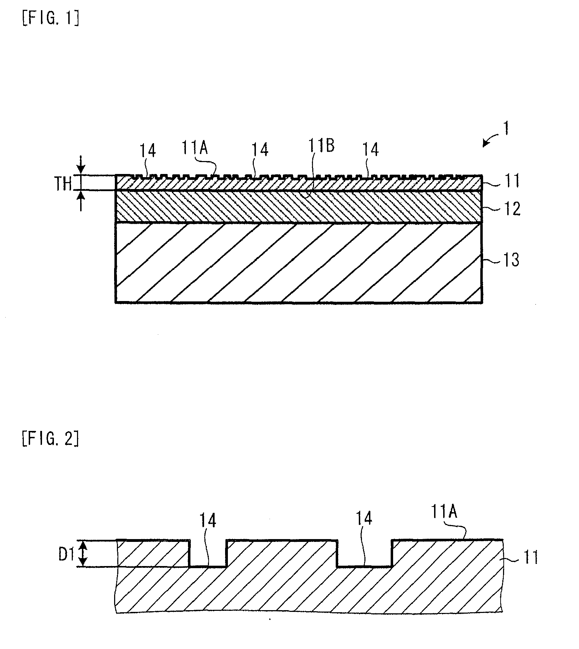

FIG. 1 shows an embodiment of the information recording medium of the present invention. An information recording medium 1 in FIG. 1 is provided with a ferroelectric thin film 11, an electrode layer 12, a supporting substrate 13, and pits 14. The external form of the information recording medium 1 is, for example, a plate-like.

The ferroelectric thin film 11 has a function of recording information. The ferroelectric thin film 11 is formed of, for example, a $LiTaO_3$ single-crystal Z-cut substrate or a $LiNbO_3$ single-crystal Z-cut substrate.

An upper surface 11A of the ferroelectric thin film 11 is flat, except for portions in which the pits 14 are formed. The thickness TH of the ferroelectric thin film 11 is desirably less than or equal to approximately 100 nm.

The electrode layer 12 is disposed under the ferroelectric thin film 11. The electrode layer 12 is joined to a lower surface 11B of the ferroelectric thin film 11. The electrode layer 12 is formed of a conducting material such as platinum, copper, aluminum, and chromium. The electrode layer 12 is, for example, less than or equal to approximately 1 $\mu$m thick.

When the pits 14 are formed in the ferroelectric thin film 11 in the manufacturing of the information recording medium 1, an electric field which exceeds the coercive electric field of the ferroelectric thin film 11 is formed in the ferroelectric thin film 11. Moreover, when information is recorded in a portion in which the pit 14 is not formed on the upper surface 11A of the ferroelectric thin film 11, the electric field which exceeds the coercive electric field of the ferroelectric thin film 11 is formed in the ferroelectric thin film 11. The electrode layer 12 functions as an electrode for forming such an electric field in the ferroelectric thin film 11.

The supporting substrate 13 is disposed under the electrode layer 12. The supporting substrate 13 has a function of supporting the ferroelectric thin film 11 and the electrode layer 12.

The supporting substrate 13 is desirably formed of the same material as that of the ferroelectric thin film 11. By forming the supporting substrate 13 of the same material as that of the ferroelectric thin film 11, it is possible to match the coefficient of thermal expansion of the supporting substrate 13 with that of the ferroelectric thin film 11. By this, it is possible to prevent the thermal expansion of the supporting substrate 13 from causing the distortion or cracks of the ferroelectric thin film 11.

The supporting substrate 13 is desirably thick enough to maintain the strength of the information recording medium 1. For example, the supporting substrate 13 is approximately 500 $\mu$m.

Incidentally, by thickening the electrode layer 12, the electrode layer 12 alone can ensure the strength of the information recording medium 1. In this case, the supporting substrate 13 is not necessarily provided.

The pits 14 are formed on the upper surface 11A of the ferroelectric thin film 11. The formed pits 14 are plural. As shown in FIG. 2, each pit 14 is a physical concave portion. The depth direction of each pit 14 is substantially perpendicular to the upper surface 11A. The minimum value of the length in the arrangement direction of each pit 14 is approximately 1 nm to 30 nm, and for example, approximately 25 nm. The depth D1 of each pit 14 is desirably greater than or equal to approximately 15 nm.

The arrangement of the pits 14 corresponds to the information; namely, the information is recorded as the arrangement of the pits 14 on the upper surface 11A of the ferroelectric thin film 11. Specifically, the information is digital data. The arrangement of the pits 14 corresponds to the bit arrangement of the digital data. For example, a bit "1" of the digital data corresponds to the pit 14.

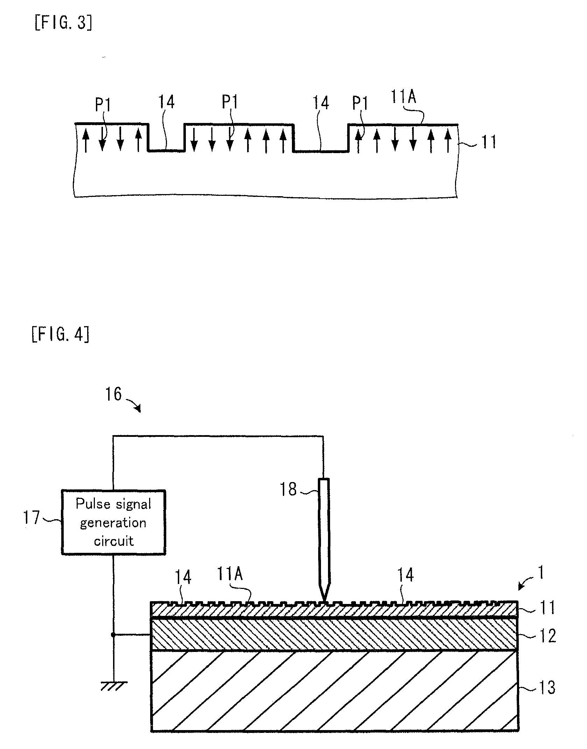

On the other hand, as shown in FIG. 3, in the portion in which the pit 14 is not formed on the upper surface 11A of the ferroelectric thin film 11, the information can be recorded as the polarization direction P1 of the ferroelectric thin film 11.

Hereinafter, the information recorded as the pits 14 in the ferroelectric thin film 11 is referred to as the "first information", and the information recorded as the polarization direction P1 in the ferroelectric thin film 11 is referred to as the "second information".

The pits 14 are formed in the process of manufacturing the information recording medium 1; namely, the first information is recorded into the ferroelectric thin film 11 in the process of manufacturing the information recording medium 1. The formation of the pits 14, i.e. the recording of the first information, will be described later.

On the other hand, the second information may be recorded in the process of manufacturing the information recording medium 1, or after the manufacturing of the information recording medium 1 is completed. For example, the information recording medium 1 without the second information recorded is sold, and a person who purchases the information recording medium 1 may record the second information onto the information recording medium 1. The second information does not have to be recorded.

If the second information is recorded, the recording can be performed in the following procedure, for example, using an information recording apparatus 16 shown in FIG. 4.

Firstly, a voltage is applied in the entire area of the upper surface 11A of the ferroelectric thin film 11, wherein the voltage has a magnitude that allows the electric field which exceeds the coercive electric field of the ferroelectric thin film 11 to be formed in the ferroelectric thin film 11. By this, the polarization direction is matched in one direction (e.g. upward) in the portion in which the pit 14 is not formed on the upper surface 11A of the ferroelectric thin film 11.

Then, a pulse signal whose voltage level changes in accordance with the bit arrangement of the second information is generated by a pulse signal generation circuit 17. The high level value of the voltage of the pulse signal is set to a value at which the electric field which exceeds the coercive electric field of the ferroelectric thin film 11 can be formed in the ferroelectric thin film 11.

Then, the pulse signal is applied to the ferroelectric thin film 11 with the probe 18 having a tip diameter of approximately 25 nm. Simultaneously with the application of the pulse signal to the ferroelectric thin film 11, the information recording medium 1 or the probe 18 is displaced parallel to the upper surface 11A, to thereby change the position of the tip of the probe 18 on the upper surface 11A of the information recording medium 1. By this, the polarization direction of the ferroelectric thin film 11 is reversed in accordance with the level of the pulse signal, and the second information is recorded onto the upper surface 11A of the ferroelectric thin film 11.

(Information Reading Method)

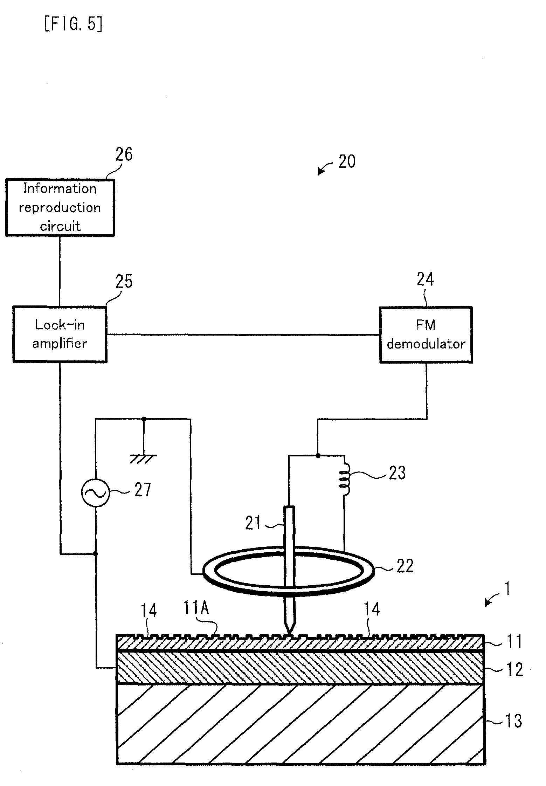

The first information and the second information recorded in the ferroelectric thin film 11 can be read, for example, by using an information reading apparatus 20 shown in FIG. 5.

The information reading apparatus 20 uses the principle of scanning nonlinear dielectric microscopy (SNDM). The information reading apparatus 20 is provided with a probe 21, a return electrode 22, an inductance element 23, a FM demodulator 24, a lock-in amplifier 25, an information reproduction circuit 26, and an oscillator 27. The diameter of the tip of the probe 21 is, for example, approximately 25 nm.

In the information reading apparatus 20, the probe 21, the return electrode 22, and the inductance element 23 constitute a LC resonator, with the capacitance of a space in the pit 14 located under the tip of the probe 21 or the capacitance of the ferroelectric thin film 11 located under the tip of the probe 21.

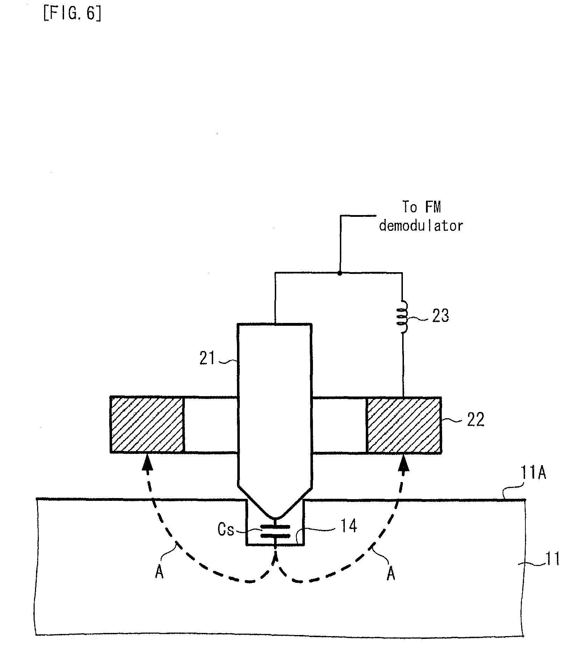

In other words, as shown in FIG. 6, when the information reading apparatus 20 is driven, a high-frequency signal is outputted from the tip of the probe 21. When the probe 21 is located on the pit 14, the high-frequency signal returns to the return electrode 22 through a path A formed between the tip of the probe 21 and the return electrode 22. This allows the frequency of the high-frequency signal to be equal to a resonance frequency determined from the inductance of the inductance element 23 and the capacitance Cs of the path A including the space in the pit 14.

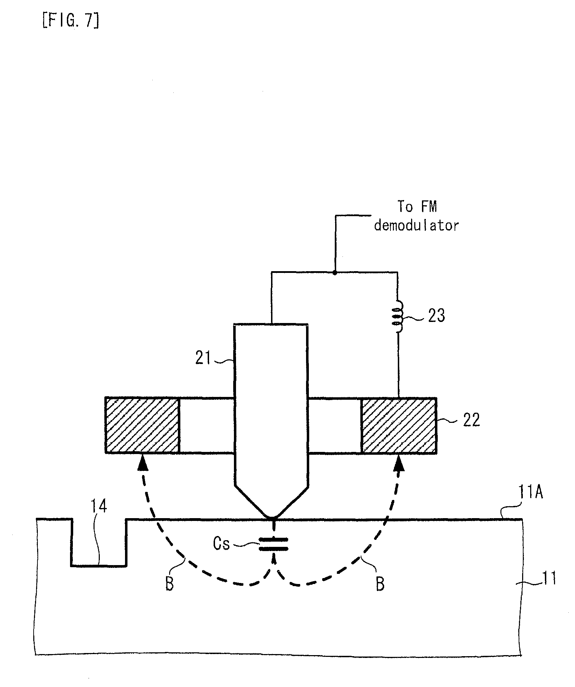

Moreover, as shown in FIG. 7, when the probe 21 is located in the portion in which the pit 14 is not formed on the upper surface 11A of the ferroelectric thin film 11, the high-frequency signal outputted from the probe 21 returns to the return electrode 22 through a path B formed between the tip of the probe 21 and the return electrode 22. This allows the frequency of the high-frequency signal to be equal to a resonance frequency determined from the inductance of the inductance element 23 and the capacitance Cs of the path B including the ferroelectric thin film 11 located under the tip of the probe 21.

The capacitance Cs varies between when the probe 21 is located on the pit 14 and when the probe 21 is located in the portion in which the pit 14 is not formed on the upper surface 11A of the ferroelectric thin film 11. Moreover, if the probe 21 is located in the portion in which the pit 14 is not formed on the upper surface 11A of the ferroelectric thin film 11, the capacitance Cs varies depending on whether the polarization direction P1 of the ferroelectric thin film 11 located under the probe 21 is upward or downward (refer to FIG. 3).

The capacitance Cs when the pit 14 is not formed on the upper surface 11A of the ferroelectric thin film 11 and when the probe 21 is located in a portion in which the polarization direction P1 is upward is assumed to be C1. The capacitance Cs when the pit 14 is not formed on the upper surface 11A of the ferroelectric thin film 11 and when the probe 21 is located in a portion in which the polarization direction P1 is downward is assumed to be C2. The capacitance Cs when the probe 21 is located on the pit 14 is assumed to be C3. Then, the frequency of the high-frequency signal changes in three ways, depending on whether the capacitance Cs under the probe 21 is C1, C2, or C3. Incidentally, the average value of the frequencies of the high-frequency signal is, for example, approximately 1.2 GHz.

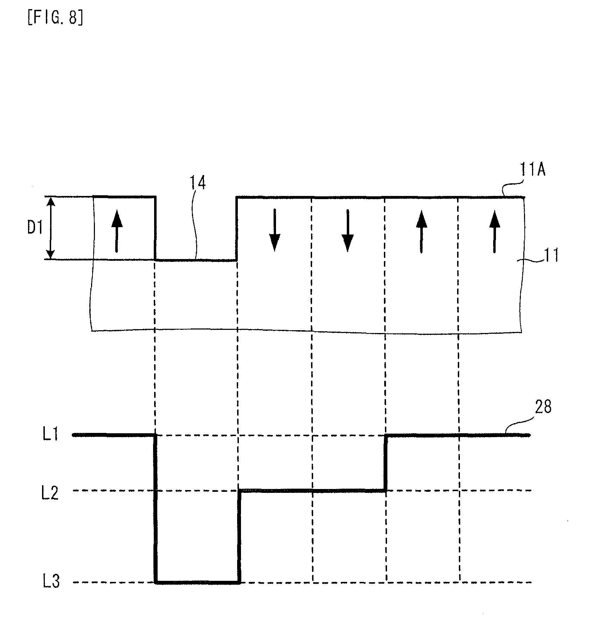

The high-frequency signal generated by the LC resonator, which is provided with the probe 21, the return electrode 22, the inductance element 23, and the capacitance Cs, is supplied to the FM demodulator 24. Then, the high-frequency signal is demodulated by the FM demodulator 24 and is supplied to the lock-in amplifier 25. Then, from the lock-in amplifier 25, a detection signal 28 shown in FIG. 8 is obtained.

In other words, when the capacitance Cs is C1, i.e. when the polarization direction P1 of the ferroelectric thin film 11 under the probe 21 is upward, the level of the detection signal 28 is L1. When the capacitance Cs is C2, i.e. when the polarization direction P1 of the ferroelectric thin film 11 under the probe 21 is downward, the level of the detection signal 28 is L2. When the capacitance Cs is C3, i.e. when the tip of the probe 21 is located on the pit 14, the level of the detection signal 28 is L3.

For example, there is a difference of 1 to 3 V between two of the three types of levels L1, L2, and L3 of the detection signal 28. Thus, the three types of levels L1, L2, and L3 of the detection signal 28 can be easily identified or distinguished by the information reproduction circuit 26 provided with a voltage detection circuit having a simple structure. This allows the easy and highly accurate reproduction of the information recorded in the ferroelectric thin film 11 as the pits 14 or the two types of polarization direction.

Incidentally, the oscillator 27 generates an alternating current (AC) signal with a frequency of approximately 5 to 100 kHz, for example. This AC signal is supplied to the ferroelectric thin film 11 and the lock-in amplifier 25 in reading the information recorded in the ferroelectric thin film 11 as the pits 14 or the two types of polarization direction. The supply of the AC signal is necessary in reading the information using the SNDM principle.

(Pit Depth)

As described above, the plurality of pits 14 are desirably formed on the upper surface 11A of the ferroelectric thin film 11, and the depth D1 of each pit 14 is desirably, for example, approximately 15 nm. However, if it is possible to distinguish between the capacitances C1 and C3, and between the capacitances C2 and C3 in reading the information recorded in the ferroelectric thin film 11, the depth D1 of each pit 14 may be different from 15 nm.

The depth D1 of the pit 14 is set such that it is possible to distinguish between the capacitances C1 and C3, and between the capacitances C2 and C3 in reading the information recorded in the ferroelectric thin film 11.

Specifically, the depth D1 of the pit 14 is desirably set such that the amount of change of the capacitance Cs of the ferroelectric thin film 11 based on the polarization direction of the ferroelectric thin film 11 is greater than that based on the presence or absence of the pit 14.

For example, the depth D1 of the pit 14 is set such that the magnitude relation of the capacitance is C3 < C2 < C1 and that the following equation (1) is satisfied.

$$C1 - C2 < C1 - C3 \quad (1)$$

The capacitance C3 is the capacitance Cs of the path A in FIG. 6. The path A includes the space in the pit 14. In the path A, if the ratio of the space increases and if the ratio of the ferroelectric substance reduces, the capacitance C3 reduces. Thus, the capacitance C3 is small if the pit 14 is deep, and the capacitance C3 is large if the pit 14 is shallow. Therefore, it is possible to satisfy the aforementioned equation (1) by setting the depth of the pit 14 to an appropriate value.

The appropriate value of the depth of the pit 14 is determined in the following procedure. Firstly, the values of the capacitances C1 and C2 are calculated or actually measured. Then, the values are applied to the aforementioned equation (1), and the tolerance of the value of the capacitance C3 is calculated. Then, the depth of the pit 14 is determined such that the actually measured value of the capacitance C3 is within the tolerance.

The study showed that the aforementioned equation (1) is satisfied by setting the depth of the pit 14 to 15nm or more.

(Method of Manufacturing Information Recording Medium)

The information recording medium 1 can be manufactured in the following manufacturing method.

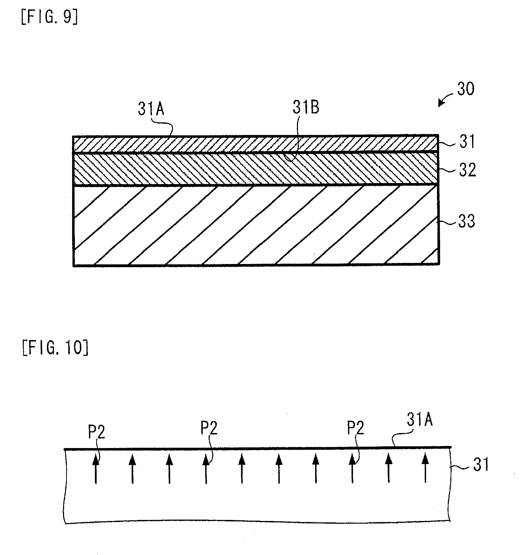

Firstly, as shown in FIG. 9, a medium material 30 is prepared, which is the material of the information recording medium 1 (preparing process).

The medium material 30 is provided with a ferroelectric thin film 31, an electrode layer 32, and a supporting substrate 33.

For the material of the ferroelectric thin film 31, a ferroelectric substance is used, (i) which is a hard, stable crystal material, (ii) in which the voltage application by the conductive probe allows information recording by the formation of a small polarization distribution, (iii) whose etching rate varies depending on the difference in the polarization direction, and (iv) in which the upper surface crosses the polarization direction of the ferroelectric substance. The ferroelectric substance that satisfies the conditions (iii) and (iv) has such a property that a plus area or a minus area on the upper surface of the ferroelectric substance is selectively etched in an etching process described later.

A $LiTa_{1-x}Nb_xO_3$ ($0 \leqq x \leqq 1$) single-crystal Z-cut substrate is the ferroelectric substance that satisfies all the conditions (i) to (iv). Therefore, the $LiTa_{1-x}Nb_xO_3$ ($0 \leqq x \leqq 1$) single-crystal Z-cut substrate is desirably used as the material of the ferroelectric thin film 31. Specifically, a $LiTaO_3$ single-crystal Z-cut substrate or a $LiNbO_3$ single-crystal Z-cut substrate is desirably used as the material of the ferroelectric thin film 31.

Incidentally, the ferroelectric substrate used as the material of the ferroelectric thin film 31 is not necessarily $LiTaO_3$ or $LiNbO_3$, but $LiTaO_3$ or $LiNbO_3$ satisfies the aforementioned conditions (i) to (iii). Moreover, the ferroelectric substrate used as the material of the ferroelectric thin film 31 is not necessarily single crystal, but single-crystal substrate satisfies the aforementioned conditions (i) to (iii). Moreover, the ferroelectric substrate used as the material of the ferroelectric thin film 31 is not necessarily a Z-cut substrate, but the Z-cut substrate satisfies the aforementioned condition (iv).

The ferroelectric thin film 31 is also desirably less than or equal to approximately 100 nm.

Moreover, the Z-cut surface of the LiTaO$_3$ single-crystal Z-cut substrate or the LiNbO$_3$ single-crystal Z-cut substrate is set to be the upper surface 31A of the ferroelectric thin film 31.

The electrode layer 32 is joined to a lower surface 31B of the ferroelectric thin film 31. The electrode layer 32 is formed of a conducting material such as platinum, copper, aluminum, and chromium. The electrode layer 32 is, for example, less than or equal to approximately 1 μm thick.

The supporting substrate 33 is disposed under the electrode layer 32. The supporting substrate 33 is desirably formed of the same material as that of the ferroelectric thin film 31. For example, the supporting substrate 33 is approximately 500 μm. Incidentally, by thickening the electrode layer 32, the electrode layer 32 alone can ensure the strength of the information recording medium 1. In this case, the supporting substrate 33 is not necessarily provided.

The ferroelectric thin film 31 and the electrode layer 32 are desirably directly joined. Moreover, the electrode layer 32 and the supporting substrate 33 are desirably directly joined, or joined through an adhesive layer. The manufacturing of a structure in which the ferroelectric thin film 31 is joined on the electrode layer 32 uses, for example, the method disclosed in Japanese Patent Application Laid Open No. 2003-208221.

Moreover, as shown in FIG. 10, in the medium material 30, the ferroelectric substance is disposed such that the upper surface 31A of the ferroelectric substance 31 is completely a +Z surface; namely, the polarization direction P2 of the upper surface 31A are upward throughout the entire upper surface 31A. According to the method disclosed in Japanese Patent Application Laid Open No. 2003-208221, it is possible to make the upper surface 31A of the ferroelectric substance 31 be completely the +Z surface in a procedure of producing the structure in which the ferroelectric thin film 31 is joined on the electrode layer 32.

Then, a voltage is applied to the ferroelectric substance 31 by a probe voltage applying apparatus (voltage applying process).

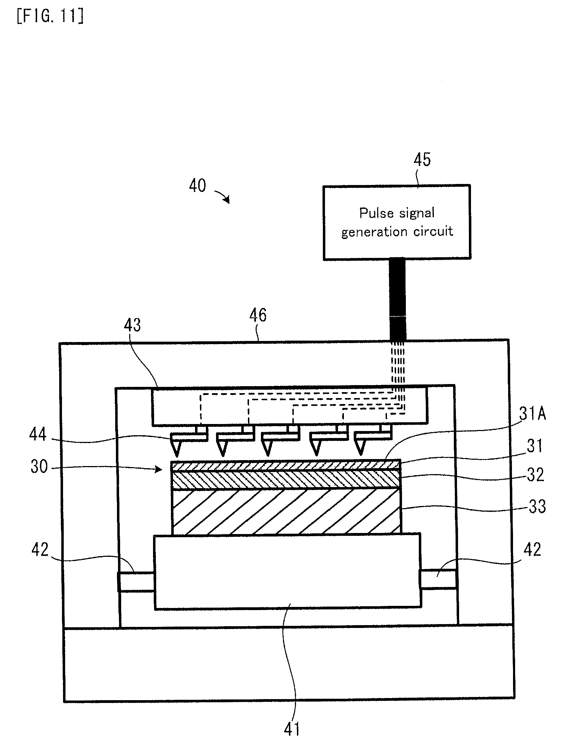

As shown in FIG. 11, the voltage applying process uses a probe voltage applying apparatus 40.

The probe voltage applying apparatus 40 is provided with an X-Y stage 41, an actuator 42, a probe array 43, and a pulse signal generation circuit 45.

The X-Y stage 41 is a base in which the medium material 30 is mounted on the upper surface thereof.

The actuator 42 displaces the X-Y stage 41 parallel to the upper surface 31A of the medium material 30 mounted on the upper surface of the X-Y stage 41. By this, the medium material 30 mounted on the upper surface of the X-Y stage 41 is displaced parallel to the upper surface 31A of the medium material 30. The actuator 42 can control the amount of displacement of the medium material 30, for example, by a unit of several nm.

The probe array 43 is located over the medium material 30 mounted on the upper surface of the X-Y stage 41 and is fixed to a housing 46. The probe array 43 has a plurality of probes 44. Each of the probes 44 has a tip diameter of, for example, approximately 25 nm. Moreover, at least the tip of each probe 44 has electrical conductivity.

The pulse signal generation circuit 45 is electrically connected to the portion having the electrical conductivity at the tip of each probe 44. The pulse signal generation circuit 45 generates information to be recorded as the pits into the ferroelectric thin film 31, i.e. a pulse signal having a waveform corresponding to the first information, through each probe 44 and supplies the pulse signal to each probe 44. The high-level voltage of the pulse signal supplied from the pulse signal generation circuit 45 to each probe 44 has the magnitude that allows the formation of an electric field which exceeds the coercive electric field of the ferroelectric substance.

In the voltage applying process, as shown in FIG. 11, the medium material 30 is placed on the upper surface of the X-Y stage 41 of the probe voltage applying apparatus 40, and the electrode layer 32 of the medium material 30 is, for example, earthed. Then, each probe 44 is bought close to or into contact with the upper surface 31A of the ferroelectric thin film 31. Then, the pulse signal is supplied to each probe 44 from the pulse signal generation circuit 45. By this, the voltage is applied between the tip of each probe 44 and the electrode layer 32 in accordance with the level of the pulse signal. By this, the polarization direction P2 of the ferroelectric substance disposed between the tip of each probe 44 and the electrode layer 32 is locally changed in accordance with the level of the pulse signal. Moreover, during the voltage application described above, the actuator 42 is driven to displace the medium material 30 parallel to the upper surface 31A. By this, the polarization distribution of the upper surface 31A of the ferroelectric thin film 31 is set in accordance with the first information.

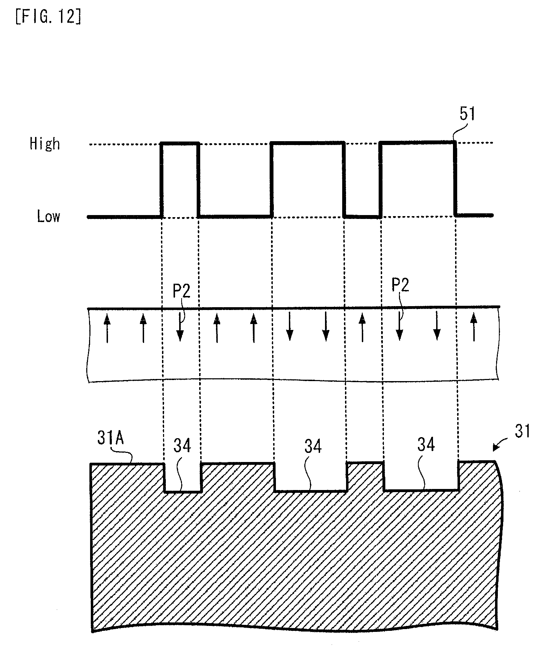

For example, as shown in FIG. 12, in a portion in which a high-level pulse signal 51 is applied on the upper surface 31A of the ferroelectric thin film 31, the polarization direction P2 of the ferroelectric thin film 31 is inverted, and the upper surface 31A locally becomes a -Z surface. Incidentally, in the upper surface 31A, a portion corresponding to the low level of the pulse signal 51 remains to be the +Z surface.

Then, the upper surface 31A of the ferroelectric thin film 31 is etched (etching process). In other words, the upper surface 31A of the ferroelectric thin film 31 of the medium material 30 after the voltage applying process is brought into contact with an etchant, to thereby etch the upper surface 31A.

The etching desirably uses a liquid or gas etchant, including HF (hydrofluoric acid). If HF or the etchant including HF is brought into contact with the Z surface of LiTaO$_3$ or LiNbO$_3$, only the -Z surface is etched, substantially.

Moreover, for the etching, a spin coat technology is desirably used. Specifically, the material medium 30 is removed from the probe voltage applying apparatus 40, and the material medium 30 is placed on a spin coating apparatus. Then, the etchant is diffused by the spin coating apparatus on the upper surface 31A of the ferroelectric thin film 31. After this process, for example, the upper surface 31A is etched at room temperature for 5 minutes and is washed with purified water to stop the etching.

Incidentally, the etching method is not limited to the spin coating. For example, it may be a method of dipping or immersing the material medium 30 in the etchant. In this case, a protector for protecting the portion other than the upper surface 31A of the medium material 30 is attached to the medium material 30.

By virtue of the etching process, as shown in FIG. 12, pits 34 are formed on the upper surface 31A of the ferroelectric thin film 31.

It is only the -Z surface on the upper surface 31A that the etching substantially progresses in the etching process. Therefore, the pits 34 are formed in an area corresponding to the -Z surface on the upper surface 31A. The area corresponding to the -Z surface on the upper surface 31A is the area in which the high-level pulse signal 51 is applied. Therefore, the pits 34 correspond to the first information (e.g. the pits 34 correspond to the digital data "1").

The minimum value of the length in the arrangement direction of each pit 34 is, for example, approximately 25 nm. Moreover, the depth of each pit 34 is, for example, greater than or equal to approximately 15 nm. The length and depth in the arrangement direction of each pit 34 can be changed by increasing or decreasing an etching time or the like in the etching process.

The minimum value of the length in the arrangement direction of each pit 34 is deeply involved in the size of the local -Z surface on the upper surface 31A of the ferroelectric thin film 31, formed in the voltage applying process. In other words, if the local -Z surface on the upper surface 31A of the ferroelectric thin film 31 is small, the minimum value of the length in the arrangement direction of each pit 34 is small. Moreover, the size of the local -Z surface on the upper surface 31A of the ferroelectric thin film 31 is deeply involved in the tip diameter of the probe 44. In other words, if the tip diameter of the probe 44 is small, the local -Z surface on the upper surface 31A of the ferroelectric thin film 31 is also small.

By the manufacturing method described above, it is possible to manufacture the information recording medium 1, using the material medium 30. In other words, the ferroelectric thin film 31, the electrode layer 32, the supporting substrate 33, and the pits 34 of the material medium 30 become the ferroelectric thin film 11, the electrode layer 12, the supporting substrate 13, and the pits 14 of the information recording medium 1, respectively.

Incidentally, if the second information is recorded into the information recording medium 1 in the manufacturing process, a process of recording the second information is added after the etching process is completed.

(Example of Use of Information Recording Medium)

The information recording medium 1 alone can be used as an information recording medium product in which the information is prerecorded (e.g. a ROM product). For example, the information recording medium 1 is encapsulated in a dust-proof cartridge. Then, the structure in which the information recording medium 1 is encapsulated in the cartridge is treated as a product. Alternatively, the information recording medium 1 may be encapsulated with a read-only probe head in the dust-proof cartridge. In this case, the structure in which the information recording medium land the probe head are encapsulated in the cartridge is treated as a product.

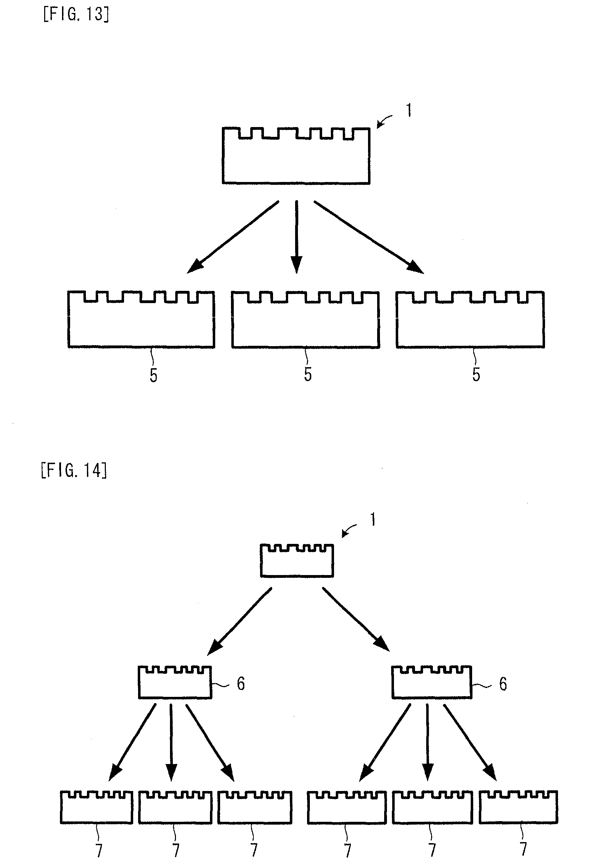

On the other hand, as shown in FIG. 13, the information recording medium 1 in which the first information is recorded may be used as a stamper, to thereby mass-produce replicas 5 of the information recording medium 1 in which the first information is recorded. The replicas 5 are formed of a resin material. Since LiTaO$_3$ or a LiNbO$_3$ is harder than the resin, it is possible to print the pits 14 formed on the upper surface 11A of the information recording medium 1 on the upper surfaces of the replicas 5 by using a known method such as nanoimprint.

Moreover, as shown in FIG. 14, the information recording medium 1 in which the first information is recorded may be used as a mother substrate, to thereby manufacture stampers 6 of the information recording medium 1 in which the first information is recorded. Moreover, the stampers 6 of the information recording medium 1 in which the first information is recorded are used to mass-produce replicas 7 of the information recording medium 1 in which the first information is recorded.

The stamper 6 is manufactured, for example, as follows. Firstly, using the method such as nanoimprint, the pits 14 formed on the upper surface 11A of the information recording medium 1 are printed on the upper surface of a resin substrate. Then, Ni is deposited on the upper surface of the resin substrate to generate a Ni-plated mold. On the upper surface of the Ni-plated mold, the pits 14 are printed. The Ni-plated mold is used as the stamper 6.

The replica 7 can be manufactured by printing the pits formed on the upper surface of the stamper 6 on the upper surface of the replica 7 formed of the resin material, using the method such as nanoimprint.

According to the mass-production method shown in FIG. 14, the information recording medium 1 is not used directly as the stamper for the replica mass-production, so it is possible to limit or control the deterioration of the pits 14 of the information recording medium 1, and it is possible to extend the life of the information recording medium 1. Moreover, since the plurality of stampers 6 can be manufactured by using the information recording medium 1 and the replicas 7 can be manufactured by using the plurality of stampers 6, it is easy to mass-produce the replicas 7 on a large scale, to thereby improve mass productivity.

On the other hand, the first information can be recorded as the pits 14 in the information recording medium 1, and the second information can be recorded as the polarization direction. It is also distinguish between the first information and the second information and reproduce them. Using this characteristic, it is possible to realize the following information recording.

For example, it is possible to record content data such as movie work and music work, as the first information into the information recording medium 1. In this case, the second information is not recorded. This allows the production of the ROM product in which the content data is recorded. Moreover, by using the information recording medium in which the content data is recorded, as the stamper or the mother substrate, it is possible to easily realize the mass production of the ROM products in which content data is recorded.

Moreover, data in which user rewriting is to be prevented or data whose storage is highly required, such as address data, data on tracking control, data for copyright protection, and data on product management, may be recorded as the first information into the information recording medium 1. An area for a user to record the second information after sales (i.e. an area in which the pit 14 is not formed) may be also reserved on the upper surface 11A of the ferroelectric thin film 11. By this, it is possible to produce the information recording medium product in which the information recording can be performed by a user.

(Effects of Embodiment or the like)

As explained above, in the method of manufacturing the information recording medium 1 in the embodiment, the medium material 30 is prepared which has the electrode layer 32 and the ferroelectric thin film 31 formed of the ferroelectric substance whose etching rate varies depending on the difference in the polarization direction, the voltage is applied by the probes 44 between the electrode layer 32 and the upper surface 31A of the ferroelectric thin film 31, to thereby locally change the polarization direction of the ferroelectric substance, and then the upper surface 31A of the ferroelectric thin film 31 is etched. This allows the manufacturing of the information recording medium 1 in which the physical pits 14 whose minimum value of the length in the arrangement direction is approximately 1 nm to 30 nm are formed on the upper surface 11A of the ferroelectric thin film 11.

Moreover, according to the information recording medium 1, it is possible to realize the information recording medium product in which the information (the first information) is recorded as the pits 14 whose minimum value of the length in the arrangement direction is approximately 1 nm to 30 nm (i.e. the ROM product). According to the information recording medium 1, it is possible to realize the high recording capacity ROM product in which the high-density information, which is 1 terabit or more per 1 inch, is recorded as the pits 14.

Furthermore, according to the information recording medium 1, the information is recorded as the pits 14 whose minimum value of the length in the arrangement direction is approximately 1 nm to 30 nm, so there are the following (i) to (iii) effects.

(i) In the information recording medium 1, the information is recorded as the physical pits 14, and the information cannot be rewritten by an electrical method such as voltage application. Therefore, compared to the case where the information is recorded as the polarization direction of the ferroelectric substance, it is possible to enhance the protection of the information. For example, it is possible to prevent the information recorded in the information recording medium 1 from being rewritten by a user.

(ii) In the information recording medium 1, the information is recorded as the physical pits 14, and the information is not deleted even at a high temperature. In other words, if the temperature of the ferroelectric substance exceeds the Curie point of the ferroelectric substance, the polarization direction of the ferroelectric substance is changed. Thus, if the information is recorded as the polarization direction of the ferroelectric substance, the information is likely deleted if the temperature of the ferroelectric substance exceeds the Curie point. In contrast, if the information is recorded as the pits, the information is not deleted even if the temperature of the ferroelectric substance exceeds the Curie point. Therefore, it is possible to improve the durability of the information and to enhance the protection of the information.

(iii) On the ferroelectric thin film 11 of the information recording medium 1, the information is recorded as the physical pits 14. Therefore, by using the information recording medium 1 as the stamper or the mother substrate, it is possible to easily realize the mass production of the replicas of the information recording medium in which the pits whose minimum value of the length in the arrangement direction is approximately 1 nm to 30 nm are formed. By this, it is possible to mass-produce the information recording medium products in which a large amount of information is recorded at high density, easily and inexpensively.

Moreover, the depth D1 of the pit 14 of the information recording medium 1 is set so as to distinguish between the capacitance C1 and the capacitance C3 and to distinguish between the capacitance C2 and the capacitance C3, wherein the capacitance C1 is the capacitance when the probe 21 is located in the portion in which the pit 14 is not formed and the polarization direction is upward, the capacitance C2 is the capacitance when the probe 21 is located on the pit 14, and the capacitance C3 is the capacitance when the probe 21 is located in the portion in which the pit 14 is not formed and the polarization direction is downward. This allows the following (iv) and (v) effects.

(iv) Even if the information (the second information) is recorded as the polarization direction into the information recording medium 1, it is possible to distinguish between the second information and the information (the first information) recorded as the pits 14, in information reading. By this, it is possible to realize both information unrewritable recording and information rewritable recording, in a single information recording medium. For example, it is possible to realize such an information recording medium that the data whose storage is highly required, such as address data, data on tracking control, data for copyright protection, and data on product management, can be recorded in an unrewritable manner and that the content data can be recorded in a rewritable manner.

(v) It is possible to realize the information recording medium which is noise-resistant. In other words, even if the second information is not recorded in the information recording medium 1, the polarization direction of the ferroelectric thin film 11 may be changed for any reason. The change in the polarization direction is possibly detected as noise in reading the first information. However, the amount of change in the capacitance Cs caused by the change in the polarization direction, i.e. the amount of change in the capacitance Cs caused by the noise, is approximately C1 - C2. On the other hand, the amount of change in the capacitance Cs corresponding to the first information is C1 - C3. Then, the depth D1 of the pit 14 in the information recording medium 1 is set to be C1 - C2 < C1 - C3. Therefore, according to the information recording medium 1, it is possible to distinguish between the first information and the noise caused by the change in the polarization direction.

Moreover, according to the method of manufacturing the information recording medium 1 described above, there are the following (vi) to (ix) effects.

(vi) By using the $LiTa_{1-x}Nb_xO_3$ ($0 \leq x \leq 1$) single-crystal Z-cut substrate, it is possible to increase the difference in the etching rate according to the difference in the polarization direction of the ferroelectric thin film 31. By this, it is possible to form the pits 34 with the depth D1, easily and quickly, in the etching process.

(vii) By setting the upper surface 31A of the ferroelectric thin film 31 be the Z-cut surface of the ferroelectric substance (e.g. $LiTaO_3$ or $LiNbO_3$ single crystal), it is possible to form the pits 34 having an appropriate shape, on the upper surface 31A of the ferroelectric thin film 31. Specifically, it is possible to set the etching direction to be substantially perpendicular to the upper surface 31A of the ferroelectric thin film 31. This allows the formation of the pits 34 in which the depth direction extends substantially perpendicular to the upper surface 31A of the ferroelectric thin film 31.

(viii) By setting the thickness of the ferroelectric thin film 31 to be less than or equal to approximately 100 nm, it is possible to make the change in the polarization direction in a local in which the length in one direction is approximately 1 nm to 30 nm, in the voltage applying process. This allows the formation of the pits 34 in which the length in the arrangement direction is approximately 1 nm to 30 nm.

(ix) In the voltage applying process, the tips of the plurality of probes 44 disposed in the probe array 43 are brought close to or into contact with the upper surface 31A of the ferroelectric thin film 31, to thereby apply the voltage between the tip of each probe 44 and the electrode layer 32. By this, it is possible to simultaneously set the polarization direction at a plurality of points on the upper surface 31A of the ferroelectric thin film 31. Therefore, it is possible to reduce the time required for the setting of the polarization direction in the voltage applying process, so that the manufacturing time of the information recording medium 1 can be reduced.


(Another Embodiment or the like)


Incidentally, the method of manufacturing the information recording medium 1 described above exemplifies the case where the pits 34 (concave portions) are formed on the upper surface 31A of the ferroelectric thin film 31; however, the present invention is not limited to this. The concave portions may be formed on the upper surface of the medium material. In this case, in the medium material 30 before the voltage is applied in the voltage applying process, the ferroelectric substance is disposed such that the upper surface 31A of the ferroelectric thin film 31 is completely the -Z surface.

The pits (the concave portions) are desirably formed on the upper surface of what is treated as the product in the end (which may be the information recording medium 1 as described above, the replica 5, or the replica 7). This is because when the information recorded in the information recording medium 1, the replica 5, or the replica 7 is read by the information reading apparatus 20, the scanning by the probes 21 is easier in the case where the information is recorded as the concave portions on the upper surface of the information recording medium 1, the replica 5, or the replica 7, compare to the case where the information is recorded as convex portions.

Therefore, when the information recording medium 1 alone is treated as the product, as shown in FIG. 10, the ferroelectric substance is desirably disposed such that the upper surface 31A of the ferroelectric thin film 31 of the medium material 30 is completely the +Z surface, to produce the information recording medium 1 in which the pits 34 are formed on the upper surface thereof.

On the other hand, when the replica 5 in FIG. 13 is treated as the product, the ferroelectric substance is desirably disposed such that the upper surface 31A of the ferroelectric thin film 31 of the medium material 30 is completely the - Z surface, to produce the information recording medium 1 in which the convex portions are formed on the upper surface thereof. By this, the pits are formed on the upper surface of the replica 5.

On the other hand, when the replica 7 in FIG. 14 is treated as the product, as shown in FIG. 10, the ferroelectric substance is desirably disposed such that the upper surface 31A of the ferroelectric thin film 31 of the medium material 30 is completely the +Z surface, to produce the information recording medium 1 in which the pits 14 are formed on the upper surface thereof. By this, the convex portions are formed on the upper surface of the stamper 6, and the pits are formed on the upper surface of the replica 7.

Moreover, in the present invention, various changes may be made, if desired, without departing from the essence or spirit of the invention which can be read from the claims and the entire specification. An information recording medium and a manufacturing method of the information recording medium, all of which involve such changes, are also intended to be within the technical scope of the present invention.

Industrial Applicability

The present invention can be applied to an information recording medium which is suitable to be used for a scanning probe memory apparatus, which uses a ferroelectric substance, and in which information is recorded as physical irregularities on the surface, and a manufacturing method of the information recording medium.

**Claims**

1. An information recording medium comprising:

   a ferroelectric thin film;
   an electrode layer disposed under said ferroelectric thin film; and
   a plurality of concave portions or a plurality of convex portions formed on an upper surface of said ferroelectric thin film,
   said plurality of concave portions or said plurality of convex portions being arranged so as to correspond to a bit arrangement of digital data,
   a minimum value of length in an arrangement direction per 1 bit of each of said concave portions or said convex portions being 1 nm or more but not exceeding 30 nm.

2. The information recording medium according to claim 1, wherein said ferroelectric thin film is formed of a $LiTa_{1-x}Nb_xO_3$ $(0 \leqq x \leqq 1)$ single-crystal Z-cut substrate.

3. The information recording medium according to claim 1, wherein said ferroelectric thin film is less than or equal to 100 nm thick.

4. The information recording medium according to claim 1, wherein a depth of each of said concave portions or a height of each of said convex portions is set such that amount of change in capacitance of said ferroelectric thin film based on a polarization direction of said ferroelectric thin film is greater than that based on presence or absence of said concave portions or said convex portions.

5. The information recording medium according to claim 1, wherein a depth of each of said concave portions or a height of each of said convex portions is greater than or equal to 15 nm.

6. The information recording medium according to claim 1, wherein
   said ferroelectric thin film is formed of a ferroelectric substance whose etching rate varies depending on a difference in a polarization direction,
   the upper surface of said ferroelectric thin film crosses the polarization direction of the ferroelectric substance, and
   said concave portions or said convex portions are formed by bringing a tip of a probe close to or into contact with the upper surface of said ferroelectric thin film, by applying a voltage between the tip of the probe and said electrode layer to thereby locally change the polarization direction of the ferroelectric substance, and then by bringing the upper surface of said ferroelectric thin film into contact with an etchant to thereby etch the upper surface.

7. An information recording medium comprising:

   a ferroelectric thin film;
   an electrode layer disposed under said ferroelectric thin film; and
   a plurality of concave portions or a plurality of convex portions formed on an upper surface of said ferroelectric thin film,
   said plurality of concave portions or said plurality of convex portions being arranged so as to correspond to a bit arrangement of digital data,
   a depth of each of said concave portions or a height of each of said convex portions being set such that amount of change in capacitance of said ferroelectric thin film based on a polarization direction of said ferroelectric thin film is greater than that based on presence or absence of said concave portions or said convex portions.

8. The information recording medium according to claim 7, wherein a depth of each of said concave portions or a height of each of said convex portions is greater than or equal to 15 nm.

9. A method of manufacturing an information recording medium in which information is recorded as physical concave portions or convex portions in a medium material, said method comprising:

a voltage applying process of locally changing a polarization direction of a ferroelectric substance by preparing the medium material, which has a ferroelectric thin film and an electrode layer, the ferroelectric thin film being formed of the ferroelectric substance whose etching rate varies depending on a difference in the polarization direction and having an upper surface crossing the polarization direction of the ferroelectric substance, the electrode layer being jointed to a lower surface of the ferroelectric thin film, by bringing a tip of a probe close to or into contact with the upper surface, and by applying a voltage between the tip of the probe and the electrode layer; and

an etching process of etching the upper surface by bringing the upper surface of the ferroelectric thin film of the medium material after said voltage applying process into contact with an etchant to thereby etch the upper surface.

10. The method of manufacturing according to claim 9, wherein the ferroelectric thin film is formed of a $LiTa_{1-x}Nb_xO_3$ ($0 \leqq x \leqq 1$) single-crystal Z-cut substrate.

11. The method of manufacturing according to claim 9, wherein said ferroelectric thin film is less than or equal to 100 nm thick.

12. The method of manufacturing according to claim 9, wherein in said voltage applying process, tips of a plurality of probes disposed in a probe array are brought close to or into contact with the upper surface of the ferroelectric thin film, and a voltage is applied between the tip of each of the probes and the electrode layer.

[FIG. 1]

[FIG. 2]

[FIG. 3]

[FIG. 4]

Pulse signal generation circuit

[FIG. 5]

[FIG. 6]

To FM
demodulator

21

23

22

11A

Cs

14

A

A

11

[FIG. 7]

[FIG. 8]

[FIG. 9]

31A    31B    30    31    32    33

[FIG. 10]

P2    P2    P2    31A    31

[FIG. 11]

[FIG. 12]

[FIG. 13]

[FIG. 14]

## INTERNATIONAL SEARCH REPORT

| | International application No. |
|---|---|
| | PCT/JP2007/067183 |

| A. CLASSIFICATION OF SUBJECT MATTER |
|---|
| *G11B9/02*(2006.01)i, *G11B9/14*(2006.01)i |

According to International Patent Classification (IPC) or to both national classification and IPC

| B. FIELDS SEARCHED |
|---|
| Minimum documentation searched (classification system followed by classification symbols) |
| G11B9/02, G11B9/14 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 6-111392 A   (Fuji Photo Film Co., Ltd.), 22 April, 1994 (22.04.94), Full text (Family: none) | 1-12 |
| A | JP 57-66576 A   (Tokyo Shibaura Electric Co., Ltd.), 22 April, 1982 (22.04.82), Full text (Family: none) | 1-12 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 November, 2007 (26.11.07) | 04 December, 2007 (04.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

**Patent documents cited in the description**

- JP HEI6111392 B

- JP 2003208221 A